# EUROPÄISCHE PATENTSCHRIFT

(11) **EP 3 898 129 B1**
(45) Veröffentlichungstag und Bekanntmachung des Hinweises auf die Patenterteilung: **26.02.2025**
(21) Anmeldenummer: 20702220.3
(22) Anmeldetag: 15.01.2020
(51) Int. Cl.: B25J 9/00, B66C 21/04, B66C 13/08, B66C 21/06

(54) **SEILROBOTER**
CABLE ROBOT
ROBOT À CÂBLES

(30) Priorität: 23.01.2019 DE 102019101623
(43) Veröffentlichungstag der Anmeldung: 27.10.2021
(73) Patentinhaber: Liebherr-Werk Biberach GmbH, 88400 Biberach an der Riss (DE)
(72) Erfinder: BRAMBERGER, Robert, 88416 Ochsenhausen (DE)
(74) Vertreter: Thoma, Michael
(86) Internationale Anmeldenummer: PCT/EP2020/050904
(87) Internationale Veröffentlichungsnummer: WO 2020/152007

(56) Entgegenhaltungen:
- CN-A- 103 831 819
- DE-A1- 102009 050 729
- DE-A1- 102009 050 729
- DE-A1- 102014 015 335
- US-B1- 10 369 693
- US-B1- 6 826 452

## Beschreibung

Die vorliegende Erfindung betrifft einen Seilroboter zum Erstellen eines Bauwerks und/oder Manipulieren eines Werkstücks, mit einem Arbeitskopf, der über eine Verseilung umfassend zumindest drei Steuerseile an einer Tragstruktur umfassend zumindest drei Tragsäulen aufgehängt ist, wobei Seilwinden zum Verstellen der Verseilung relativ zu der Tragstruktur und/oder relativ zum Arbeitskopf vorgesehen und von einer elektronischen Steuervorrichtung zum Verfahren des Arbeitskopfs ansteuerbar sind.

Als Seilroboter werden üblicherweise Manipulatoren bezeichnet, die als bewegungsübertragende Bauteile keine steifen bzw. starren Verbindungsglieder, Ausleger oder Arme wie beispielsweise Knickarm-Roboter einsetzen, sondern biegeweiche Zugelemente zur Kraftübertragung verwenden. Solche biegeweichen Zugelemente in Form von Seilen, insbesondere Stahl- oder Faserseile, werden üblicherweise von verschiedenen Anlenkpunkten an einer Tragstruktur zu einem Arbeitskopf geführt, der von den aufgespannten Seilen getragen wird. Durch Ablassen bzw. Einholen der Seile mittels Seilwinden, die an der Tragstruktur an den genannten Anlenkpunkten angeordnet oder auch an anderer Stelle positioniert und das Seil über eine oder mehrere Umlenkrollen einholen können, kann die Verseilung relativ zur Tragstruktur verstellt und damit der Arbeitskopf verfahren werden. Gegebenenfalls kann die Verseilung auch relativ zu dem Arbeitskopf verstellt werden, beispielsweise durch eine am Arbeitskopf vorgesehene Seilwinde wie beispielsweise eine Spillwinde. Durch aufeinander abgestimmtes Ablassen und Einholen der Seile, beispielsweise zueinander synchron oder zueinander gegenläufig, kann der Arbeitskopf wahlweise in vertikaler Richtung und/oder in horizontaler Richtung verfahren werden.

Durch die Verwendung einer solchen verstellbaren Verseilung kann der von dem Arbeitskopf bedienbare Arbeitsraum bzw. -bereich nahezu unbegrenzt ausgedehnt werden und insbesondere sehr viel größer als bei herkömmlichen Knickarm- oder Portalrobotern sein. Gleichzeitig können sehr hohe Geschwindigkeiten und Beschleunigungen gefahren werden, da die Seile hohe Verfahrgeschwindigkeiten ermöglichen.

Aufgrund des sehr großen Arbeitsbereichs werden solche Seilroboter beispielsweise zum Verfahren von Fernseh- bzw. Videokameras in Sportstadien oder auch auf Baustellen verwendet, um ein größeres Bauwerk wie beispielsweise ein Haus bzw. Teile hiervon zu fertigen oder Materialien hierfür zu verfrachten. Von der 3D-DruckTechnik inspiriert ist es beispielsweise bekannt, als Arbeitskopf an einem solchen Seilroboter einen Spritzbeton-Ausbringkopf zu verfahren, um eine Spritzbeton-Kontur zu erzeugen, oder Fertigbauteile punktgenau abzusetzen, um eine Mauer bzw. Gebäudewand zu errichten, vgl. Christian K. Karl et al. "Industrie 4.0 in der Bauwirtschaft - Einfluss der automatisierten Gebäudeerstellung auf die gewerbliche Berufsbildung", Universität Köln, 2017. Grundsätzlich können solche Seilroboter aber auch in der herstellenden Industrie wie z.B. Stahlbauunternehmen, Windanlagenhersteller oder Schiffswerften eingesetzt werden, um größere Bauwerke bzw. Werkstücke zu fertigen bzw. zu handeln. Aufgrund der Seildehnung und zum Teil sehr langen Übertragungsstrecken werden zumindest bislang Seilroboter für Positionieraufgaben mit allerhöchster Genauigkeit allerdings eher weniger eingesetzt.

Ferner zeigt die DE 10 2009 050 729 A1 einen mobilen Seilroboter zur Montage von Großbaugruppen wie Solarkraftwerksmodulen, wobei auf Lkw-Anhängern bzw. ähnlichen Unterwagen jeweils ein Mast fixiert wird, so dass zwischen den Masten der Lkw-Anhänger eine Verseilung aufspannbar ist, die einen verfahrbaren Roboterkopf trägt. DE 10 2009 050 729 A1 offenbart einen Seilroboter gemäß dem Oberbegriff des Anspruchs 1.

Einen weiteren Seilroboter, dessen Verseilung zwischen Ladekranen, die auf einem Schiff montiert sind, aufgespannt wird, zeigt die US 6 826 452 B.

Um bei sehr langen Verseilungen Gewicht zu sparen, wurde bereits vorgeschlagen, anstelle von Stahlseilen hochfeste Faserseile einzusetzen, die aus hochfesten Kunstfasern wie beispielsweise Aramidfasern (HMPA), Aramid- /Kohlefasergemischen, hochmodularen Polyethylenfasern (HMPE), oder Poly(p-phenylene-2,6-benzobisoxazole)-Fasern (PBO) bestehen oder aufweisen können. Durch die Gewichtsersparnis gegenüber Stahlseilen von bis zu 80% bei annähernd gleicher Bruchfestigkeit kann die Traglast bzw. die zulässige Hublast erhöht werden, da das für die Traglast zu berücksichtigende Eigengewicht des Seils deutlich geringer ist. Neben der Ersparnis beim Konstruktionsgewicht werden auch die zu bewegenden Massen reduziert, was zu einer weiteren Traglaststeigerung führt. Des Weiteren ist die Ausführung als Faserseil weniger störanfällig für windinduzierte Querschwingungen, wie dies beispielsweise bei unter Spannung stehenden Seilen im Brückenbau der Fall ist.

Zusätzlich zu den genannten Gewichtsvorteilen zeichnen sich Seiltriebe mit Kunstfaserseilen durch eine beträchtlich größere Lebensdauer, leichteres Hantieren und gute Biegsamkeit sowie nicht mehr notwendige Seilschmierung aus.

Den Einsatz solcher hochfesten Faserseile an einem Seilroboter schlägt beispielsweise der "Beitrag zur Untersuchung von hochfesten synthetischen Faserseilen unter hochdynamischer Beanspruchung" von Martin Wehr in Berichte aus dem Institut für Fördertechnik und Logistik, Universität Stuttgart, Mai 2017 vor. Auch die Schrift WO 2017/174201 A1 beschreibt einen Seilroboter, für dessen Steuerseile hochfeste Faserseile umfassend Kunstfasern wie Polyester vorgeschlagen werden, wobei der genannte Seilroboter einen Spritzbetonkopf tragen soll, mittels dessen spritzfähiger Beton ausgebracht und hierdurch Gebäudewandungen additiv aufgebaut werden sollen. Die Steuerseile werden dabei mittels Seilwinden abgelassen bzw. eingeholt, welche Seilwinden an einem rechteckigen, portalähnlichen Traggerüst befestigt sind.

Einen ähnlichen Seilroboter für die Erstellung von Spritzbetonwänden zeigt die Schrift DE 10 2014 015 335 B4, gemäß der als Tragstruktur mehrere separate Tragsäulen Verwendung finden, die mobil handhabbar ausgebildet sind. Konkret werden vier Gitterfachwerk-Säulen an den Eckpunkten eines rechteckigen Bauplatzes montiert. Von den Gitterfachwerk-Säulen werden jeweils zwei Seile zum Arbeitskopf abgelassen, die über Umlenkrollen im oberen Bereich der Gitterfachwerk-säulen umgelenkt und auf Seiltrommeln im Fußbereich der Säulen aufgewickelt werden.

Solche Seilroboter, die tatsächlich größere Arbeitsbereiche abdecken und beispielsweise auch für Baustellen bzw. die Errichtung von Gebäuden eingesetzt werden können, sind jedoch aufwändig und schwierig am Einsatzort zu errichten und zu montieren bzw. wieder abzubauen. Zum einen sind die Tragstruktur bzw. deren Teile aufgrund entsprechender Abmessungen nicht mehr ohne weiteres zu transportieren. Zum anderen werden beträchtliche Rüstzeiten benötigt, um die Trägerstruktur zu montieren und deren Teile zueinander auszurichten.

Hinzu kommt die Problematik, dass die Genauigkeit, mit der der Arbeitskopf positioniert werden kann, sehr schnell recht stark leidet, wenn die Anlenkpunkte der Steuerseile in Folge von Ungenauigkeiten bzw. Ausrichtefehlern beim Montieren der Tragstruktur auch nur kleinere Abweichungen von ihren Sollpositionen haben, was beispielsweise aus leichten Schrägstellungen oder Ungenauigkeiten bei der Beabstandung der Tragsäulen voneinander resultieren kann. Aufgrund des Schrägverlaufs der Steuerseile wirken sich Positionsfehler der Anlenkpunkte beispielsweise bezüglich der Höhenstellung des Arbeitskopfes stark aus. Gleichzeitig können sich von der Steuervorrichtung vorgegebene, beispielsweise an sich gerade Verfahrwege des Arbeitskopfs verziehen, wenn die Position der Anlenkpunkte nicht exakt dem hierfür vorgegebenen Raster entspricht.

Der vorliegenden Erfindung liegt daher die Aufgabe zugrunde, einen verbesserten Seilroboter der eingangs genannte Art zu schaffen, der Nachteile des Standes der Technik vermeidet und letzteren in vorteilhafter Weise weiterbildet. Insbesondere soll ein einfach zu transportierender Seilroboter mit großem Arbeitsbereich geschaffen werden, der trotz einfacher und rascher Montage sowie Demontage eine hohe Positioniergenauigkeit beim Verfahren des Arbeitskopfes erreicht.

Erfindungsgemäß wird die genannte Aufgabe durch einen Seilroboter gemäß Anspruch 1 gelöst. Bevorzugte Ausgestaltungen der Erfindung sind Gegenstand der abhängigen Ansprüche.

Es wird also vorgeschlagen, die Tragsäulen der Tragstruktur separat voneinander als mobile Einheiten auszubilden und auf einem verfahrbaren Unterwagen anzuordnen, der gleichzeitig als Abstützbasis für das Aufrichten der Tragsäulen dient. Erfindungsgemäß sind die Tragsäulen jeweils wippbar und/oder teleskopierbar und/oder klappbar auf einer Drehbühne angeordnet, die ein Ballastgewicht zum Abfangen eines von der Verseilung in die jeweilige Tragsäule eingeleiteten Kippmoments aufweist und um eine aufrechte Achse drehbar auf einem Unterwagen angeordnet ist, der ein Fahrwerk aufweist und zusammen mit der Drehbühne und dem in eine Transportstellung abgewippten und/oder einteleskopierten und/oder zusammengeklappten Tragsäule verfahrbar ausgebildet ist. Die Tragsäulen brauchen also nicht auf einem separat zu errichtenden Fundament eigens montiert werden, sondern können auf dem Unterwagen an den gewünschten Aufstellort gefahren werden, um dort auf dem Unterwagen in die Arbeitsstellung aufgerichtet zu werden.

Dabei kann die jeweilige Tragsäule durch Verdrehen der Drehbühne relativ zu den anderen Tragsäulen und/oder entsprechend dem gewünschten Verlauf der Verseilung einfach ausgerichtet werden, wobei der auf der Drehbühne angebrachte Ballast das Kippmoment kompensieren bzw. abfangen kann, welches von der Verseilung her in die Tragsäule eingeleitet wird.

Die Verseilung umfasst dabei vorteilhafterweise ein hochfestes Faserseil, das aus hochfesten Kunstfasern wie beispielsweise Aramidfasern (HMPA), Aramid-/Kohlefasergemischen, hochmodularen Polyethylenfasern (HMPE), oder Poly(p-phenylene-2,6-benzobisoxazole)-Fasern (PBO) bestehen können oder zumindest derartige Fasern aufweisen können. Durch die Verwendung solcher hochfester Faserseile sinkt nicht nur das Gewicht der Verseilung selbst sondern lassen sich auch die Konstruktionsgewichte davon belasteter Bauteile und die bewegten Massen reduzieren, was einerseits zu einer Traglaststeigerung der Anwendung führt und andererseits vor allen Dingen auch eine leichtere Einhaltung der für den Straßentransport zulässigen Achslasten auch bei einer geringeren Achszahl ermöglicht. Gleichzeitig kann durch die geringe Dehnung solcher Faserteile die Positioniergenauigkeit des Arbeitskopfs verbessert werden. Hinzu kommt, dass das Faserseil weniger störanfällig für windinduzierte Querschwingungen ist, sodass der Arbeitskopf im freien mit nicht immer perfekten Wetterbedingungen präziser positioniert werden kann.

Um die Tragsäulen auf den jeweiligen Drehbühnen einfach aufrichten bzw. aus einer verkleinerten Transportstellung in eine bestimmungsgemäße Arbeitsstellung zu verbringen, können die Drehbühnen jeweils einen fremdenergiebetätigten Wippantrieb aufweisen, um die Tragsäulen aus einer liegenden Transportstellung in die aufrechte Arbeitsstellung und umgekehrt aufwippen und niederwippen zu können. Ein solcher Wippantrieb kann insbesondere einen oder auch mehrere parallel geschaltete Wippzylinder beispielsweise in Form eines Hydraulikzylinders aufweisen, der einerseits an der Drehbühne und andererseits an der Tragsäule angreifen kann. Die Tragsäule kann mit einem Fußstück um eine liegende Wippachse an der Drehbühne wippbar angelenkt sein.

Um die Länge der Tragsäule für den Transport mit geringem Montage- bzw. Demontage-Aufwand reduzieren zu können, können die Tragsäulen jeweils mehrere Säulenstücke umfassen, die relativ zueinander ein- und austeleskopierbar und/oder ein- und aufklappbar sein können. Dabei können auch ein- und austeleskopierbare Säulenschüsse mit einem oder mehreren klappbaren Säulenstücken kombiniert sein, beispielsweise dergestalt, dass aus einem wippbar an der Drehbühne angelenkten Anlenkschuss zumindest ein weiterer Säulenschuss austeleskopierbar ist, welcher wiederum klappbar einen weiteren Tragsäulenteil lagert. Sind klappbare Säulenstücke vorhanden, kann diesen ein Klappantrieb beispielsweise in Form eines Druckmittelzylinders zum Ein- und/oder Ausklappen zugeordnet sein. In der ausgeklappten Arbeitsstellung können sich die Tragsäulenstücke entlang einer gemeinsamen Säulenlängsachse bzw. koaxial hierzu erstrecken.

Als Teleskopierantrieb zum Aus- und/oder Einteleskopieren kann beispielsweise ein Teleskopierzylinder im Inneren der entsprechenden Teleskopschüsse und/oder ein Seilzugantrieb vorgesehen sein.

In vorteilhafter Weiterbildung der Erfindung kann die Tragstruktur zum Aufspannen bzw. Anlenken der Verseilung, mittels derer der Arbeitskopf aufgehängt ist, zumindest einen Kran umfassen, der neben seiner Funktion als Tragstrukturteil auch eigenständig als Kran funktionsfähig ausgebildet sein kann. Insbesondere kann ein Turmdrehkran, insbesondere in Form eines Untendrehers, als Tragstrukturteil verwendet werden, wobei der genannte Turmdrehkran für seine Funktion als Kran bzw. Hubvorrichtung in an sich bekannter Weise einen Ausleger aufweisen kann, von welchem ein Hubseil mit einem Hubhaken ablaufen kann. Der Ausleger kann dabei ein Horizontalausleger oder auch ein Wippausleger sein, wobei das Hubseil vorteilhafterweise über eine Laufkatze ablaufen kann, welche entlang des Auslegers verfahrbar ist.

Für seine Funktion als Tragstrukturteil, kann an dem Turm des Turmdrehkrans ein Anlenkpunkt für ein Steuerseil des Seilroboters vorgesehen sein, beispielsweise durch eine Umlenkrolle in einem oberen Abschnitt des Turms und/oder durch eine Seilwinde, die in einem oberen Abschnitt des Turms montiert sein kann. Vorteilhafterweise können auch mehrere Anlenkpunkte für mehrere Steuerseile an dem Turm des Turmdrehkrans angebracht sein, beispielsweise in Form von zueinander höhenversetzten Umlenkrollen, über die die Steuerseile zu Seilwinden am Fußbereich des Turms umgelenkt werden. Der Turm des Krans kann also eine Tragsäule für die Verseilung bilden. Alternativ oder zusätzlich kann auch am Ausleger des Krans ein Anlenkpunkt für die Verseilung angebracht sein.

Die Verwendung eines solchen Turmdrehkrans als Tragstrukturteil, von dem zumindest ein Steuerseil des Seilroboters abläuft, können vor der Montage des Seilroboters oder nach der Demontage des Seilroboters, gegebenenfalls auch bei aufgebautem Seilroboter kleinere Hub- bzw. Förderaufgaben übernommen werden. Insbesondere kann der Kran für die Montage des Seilroboters oder die Demontage des Seilroboters verwendet werden, beispielsweise für das Anbringen bzw. Demontieren des Arbeitskopfes. Der Kran kann auch für den Materialtransport zur Baustelle eingesetzt werden, oder andere, baustellentypische Hubaufgaben ausführen.

Vorteilhafterweise ist der genannte Turmdrehkran als Mobilkran ausgebildet, dessen Turm auf einer Drehbühne angeordnet ist, die um eine aufrechte Achse drehbar auf einem Unterwagen gelagert ist, der ein Fahrwerk aufweist und vorteilhafterweise einen eigenen Fahrantrieb besitzt, um selbstfahrend zu sein. Vorteilhafterweise ist auf dem Oberwagen bzw. der Drehbühne, an der der Turm angelenkt ist, ein Ballastgewicht zum Abfangen von Kippmomenten vorgesehen, welches mit der Drehbühne mitrotiert und den Kran unabhängig von dessen Drehstellung austariert.

Der genannte Kran kann zusätzlich zu den vorgenannten drei Tragsäulen Verwendung finden, sodass die Verseilung von vier Anlenkpunkten her aufspannbar ist. Sind drei Anlenkpunkte ausreichend, kann der genannte Kran auch eine der genannten zumindest drei Tragsäulen bilden, wobei umgekehrt auch mehr als vier Anlenkpunkte möglich sind.

Die zuvor genannten, zumindest drei Tragsäulen sind vorteilhafterweise ebenfalls auf Unterwagen mit einem jeweils eigenen Fahrantrieb zum Antreiben zumindest einer Fahrwerksachse angeordnet, sodass auch die Tragsäulen selbstfahrend ausgebildet sind. Insbesondere können die Unterwagen der Tragsäulen und des Krans jeweils als LKW ausgebildet sein, der zumindest eine lenkbare Fahrwerksachse aufweist, die aus einem Fahrerhaus bzw. von einem Fahrerstand her eingeschlagen werden kann, an welchem Fahrerstand auch die weiteren Steuerpedale und - hebel für den Fahrwerksantrieb angebracht sein können.

Die Steuervorrichtung, die den Arbeitskopf in der gewünschten Weise verfährt und hierfür die Seilwinden betätigt, mittels derer die Seile der Verseilung verstellt werden, kann grundsätzlich verschieden strukturiert sein, wobei die genannte Steuervorrichtung vorteilhafterweise elektronisch ausgebildet ist und insbesondere einen Mikroprozessor aufweisen kann, der ein Steuerungsprogramm abarbeiten kann, welches in einer Speichereinrichtung abgespeichert sein kann. Die Steuervorrichtung kann dabei automatisch oder halbautomatisch einen vorbestimmten Verfahrweg des Arbeitskopfes abfahren, beispielsweise eine gerade, horizontale Strecke oder eine ansteigende oder abfallende Kurvenbewegung ausführen, die beispielsweise anhand eines BIM-Modells vorgegeben werden kann. Alternativ oder zusätzlich kann die Steuervorrichtung aber auch auf Eingabebefehle eines Maschinenführers reagieren und diese in eine entsprechende Stellbewegung des Arbeitskopfs umsetzen, indem die Steuervorrichtung die Eingabebefehle, beispielsweise das Verkippen oder Verschieben eines Joysticks in eine bestimmte Richtung in entsprechende Drehbewegungen der Seilwinden umsetzt.

Die genannte Steuervorrichtung kann dabei modular aufgebaut sein, insbesondere an jeder der mobilen Einheiten, die eine Tragsäule mit zumindest einer Seilwinde umfasst oder als Kran ausgebildet ist, eine lokale Steuervorrichtung aufweisen, die die zumindest eine Seilwinde ansteuert und/oder die Traglast bzw. das auf die jeweilige Einheit wirkende Kippmoment überwacht und gegebenenfalls die Anlage stillsetzt, falls eine die Standsicherheit gefährdende Bewegung bzw. Belastung droht.

Um die Seilbewegungen an den verschiedenen Tragsäulen bzw. dem zumindest einen Kran aufeinander abzustimmen und miteinander zu koordinieren, kann die Steuervorrichtung ferner eine übergeordnete Steuereinheit umfassen, die in der zuvor genannten Weise elektronisch ausgebildet sein und Mikroprozessor, Programmspeicher und weitere Bauteile aufweisen kann, wobei die genannte übergeordnete Steuereinheit mit den lokalen Steuereinrichtungen kommunizieren kann, um über die genannten lokalen Steuereinheiten die jeweiligen Seilwinden aufeinander abgestimmt anzusteuern und zu betätigen, um in der gewünschten Weise aufeinander abgestimmte Seilbewegungen zu erzielen.

Die genannte übergeordnete Steuereinheit kann hierbei von einer der lokalen Steuereinrichtungen gebildet sein, welche sozusagen eine Mastereinheit bildet, die die anderen, lokalen Steuereinrichtungen überwacht und/oder ansteuert. Alternativ zu einer solchen modularen Steuerungsarchitektur kann jedoch auch eine zentrale Steuervorrichtung Verwendung finden, die die Seilwinden an den einzelnen Einheiten direkt ansteuert.

In Weiterbildung der Erfindung umfasst die genannte Steuervorrichtung einen Anpassungs- bzw. Korrekturbaustein, der zum Erzeugen eines gewünschten Verfahrwegs des Arbeitskopfs die Verfahrbefehle für die einzelnen Seilwinden anpasst und korrigiert, wenn die Positionen und/oder Ausrichtungen der Tragsäulen bzw. Tragstrukturteile und der daran vorgesehenen Anlenkpunkte für die Seile der Verseilung von einem an sich vorbestimmten Aufstellmuster abweichen. Beispielsweise kann die Steuervorrichtung die Stellbewegungen, insbesondere Stellgeschwindigkeiten und -beschleunigungen und Stellwege der einzelnen Seilwinden für einen bestimmten Verfahrweg des Arbeitskopfes unter der Annahme festlegen, dass die Anlenkpunkte der Seile der Verseilung exakt ein vorbestimmtes Rechteck vorbestimmter Abmessung definieren - bzw. bei mehreren, schräg nach oben und schräg nach unten verlaufenden Steuerseilen mehrere solcher übereinander liegender Rechtecke definieren. Weicht nun das tatsächlich von den Tragsäulen und gegebenenfalls dem genannten Kran aufgespannte Viereck der Anlenkpunkte der Verseilung von den Abmessungen des vorbestimmten Rechtecks ab, oder liegt das definierte Rechteck nicht exakt in einer horizontalen Ebene, beispielsweise weil die verschiedenen Tragsäulen auf einem schiefen bzw. geneigten Bauplatz aufgestellt worden sind oder die vorbestimmten Abstände der Tragsäulen voneinander nicht exakt eingehalten wurden, korrigiert die Steuervorrichtung mit Hilfe des genannte Anpassungs- und/oder Korrekturmoduls die Steuerbefehle für die Windenbetätigung, um die Positionsfehler der Anlenkpunkte zu korrigieren bzw. zu kompensieren.

Die exakten Positionen bzw. Abstände der Tragsäulen voneinander können der Steuervorrichtung beispielsweise händisch eingegeben werden, wofür die Steuervorrichtung eine entsprechende Eingabeschnittstelle beispielsweise in Form eines Touch Screens aufweisen kann. Vorteilhafterweise jedoch umfasst die Steuervorrichtung eine Sensoreinrichtung, die die Ist-Positionen der Tragsäulen und/oder der Anlenkpunkte der Seile der Verseilung relativ zueinander bestimmt und der Steuervorrichtung bzw. der genannten Anpassungs- und/oder Korrektureinheit zuführt bzw. bereitstellt. Eine solche Sensoreinrichtung kann beispielsweise absolute Positionssensoren umfassen, die beispielsweise als GPS-Sensoren ausgebildet sein können, um die absolute Position der einzelnen Tragsäulen exakt zu bestimmen.

Um auch kleinere Positions- bzw. Ausrichtungsfehler exakt erfassen zu können, kann die genannte Sensoreinrichtung vorteilhafterweise Relativsensoren umfassen, die die Position der Tragsäulen und/oder der daran angebrachten Anlenkpunkte für die Verseilung relativ zueinander und/oder relativ zu einem vorbestimmten Umgebungspunkt der Aufstellumgebung erfassen, kann die Sensorik Abstandssensoren zum Erfassen des Relativabstands einer jeweiligen Tragsäule von einer oder mehrerer anderen Tragsäulen und/oder von einem vorbestimmten Umgebungspunkt aufweisen, sodass die Steuervorrichtung exakt die relative Beabstandung der Tragsäulen voneinander kennt. Ein solcher Abstandssensor kann beispielsweise eine Lasermesseinrichtung sein, die den Abstand zu den weiteren Tragsäulen und/oder von einem vorbestimmten Umgebungspunkt misst.

Vorteilhafterweise arbeiten die genannten Abstandssensoren dabei in einer horizontalen Ebene, um den Horizontalabstand der Tragsäulen bzw. der daran angebrachten Anlenkpunkte voneinander zu bestimmen.

Um auch Positionsfehler in vertikaler Richtung beispielsweise in Folge eines geneigten Bauplatzes erfassen zu können, kann die genannte Sensoreinrichtung vorteilhafterweise auch Niveausensoren umfassen, die die Höhenstellung einer jeweiligen Tragsäule relativ zu einer oder mehreren anderen Tragsäulen und/oder relativ zum Niveau eines vorbestimmten Umgebungspunkts, das als Null-Niveau dient, messen kann. Ein solcher Niveausensor zum Bestimmen des relativen Höhenversatzes zwischen zwei Tragsäulen bzw. Seilanlenkpunkten kann ebenfalls grundsätzlich verschieden ausgebildet sein, beispielsweise nach dem Triangulationsverfahren arbeiten und/oder einen optischen, insbesondere Lasersensor umfassen, der einen bestimmten Punkt an der anderen Tragsäule und/oder einen Umgebungspunkt anpeilt bzw. erfasst.

Die Erfindung wird nachfolgend anhand eines bevorzugten Ausführungsbeispiels und zugehöriger Zeichnungen näher erläutert. In den Zeichnungen zeigen:

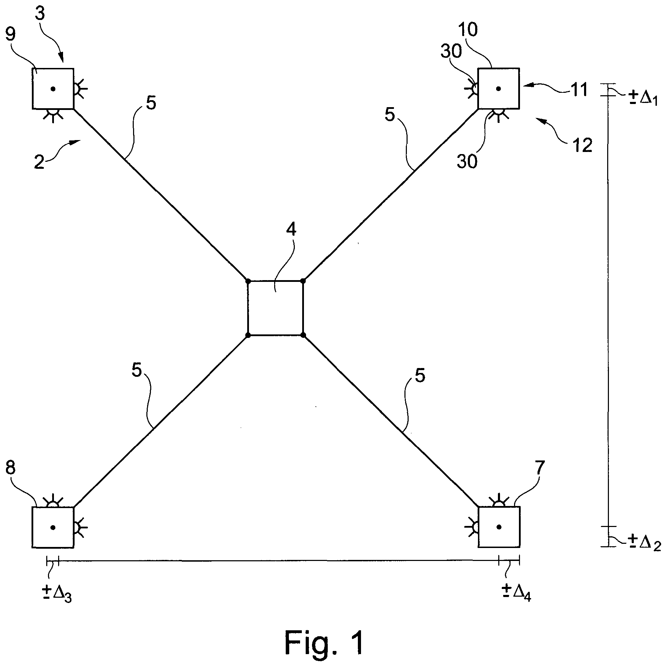

- Fig. 1:: eine Draufsicht auf einen Seilroboter nach einer vorteilhaften Ausführung der Erfindung, gemäß der die Tragstruktur für die Verseilung des Seilroboters mehrere eigenständig verfahrbare Fahrzeugeinheiten aufweist, von denen einige als mobile Tragsäuleneinheiten und zumindest eine als mobiler Kran ausgebildet sind, und

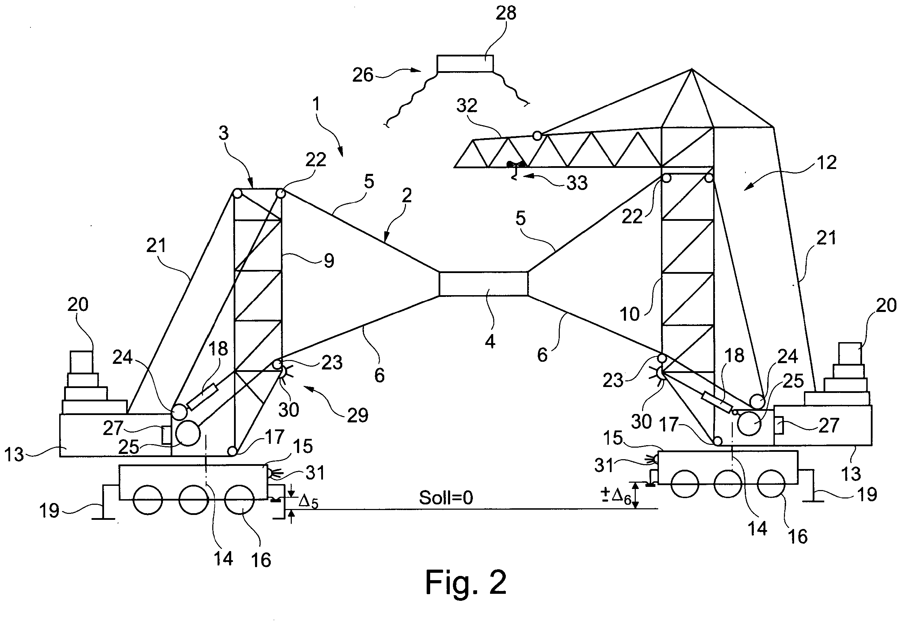

- Fig. 2:: eine Seitenansicht des Seilroboters aus Fig. 1, die eine Trägersäule und den Kran zeigt, an denen die Verseilung jeweils mit zwei Steuerseilen angelenkt ist, die zueinander höhenversetzte Anlenkpunkte an der Säule bzw. dem Kranturm haben und jeweils von einer Seilwinde eingeholt und abgelassen werden können.

Wie die Figuren zeigen, umfasst der Seilroboter 1 eine Verseilung 2, die von einer Tragstruktur 3 aufgespannt ist und einen Arbeitskopf 4 trägt.

Der genannte Arbeitskopf 4 kann verschieden ausgebildet sein und/oder mit verschiedenen Arbeitswerkzeugen bestückt werden, beispielsweise in Form eines Materialausbringkopfs wie Betonspritzkopf oder eines anderen Fertigungswerkzeugs und/oder in Form eines Werkstückgreifers oder eines anderen Handling-Werkzeugs wie beispielsweise einen Zweischalengreifer.

Die Verseilung 2 kann dabei, wie Figur 1 zeigt, in vier Himmelsrichtungen bzw. in vier verschiedenen vertikalen Ebenen verlaufende Seile umfassen, wobei vorteilhafterweise jeder Himmelsrichtung bzw. jeder vertikalen Ebene zwei Seile 5, 6 vorgesehen sein können, die von unterschiedlich hoch angeordneten Anlenkpunkten ablaufen können, insbesondere den Arbeitskopf 4 einmal schräg nach oben und einmal schräg nach unten führen können, vgl. Figur 2.

Insbesondere kann die Tragstruktur vier separate, jeweils aufrechte Tragsäulen 7, 8, 9 und 10 umfassen, von denen zumindest eine vom Turm 11 eines Turmdrehkrans 12 gebildet sein kann.

Vorteilhafterweise sind die genannten Tragsäulen 7, 8, 9 und 10 einschließlich des Turms 11 des Turmdrehkrans 12 jeweils Teil einer eigenständig verfahrbaren, mobilen Einheit ausgebildet, sodass die Tragsäulen 7, 8, 9 und 10 unabhängig voneinander verfahren und transportiert werden können.

Können die Tragsäulen 7, 8, 9 und 10 bzw. der Turm 11 des Krans 12 auf einer Drehbühne 13 montiert sein, die um eine aufrechte Drehbühnenachse 14 drehbar auf einem Unterwagen 15 angeordnet ist. Ein nicht eigens gezeigter Drehantrieb beispielsweise umfassend einen Zahnkranz und ein damit kämmendes Antriebsritzel kann die Drehbühne 14 gegenüber dem Unterwagen 15 verdrehen.

Der genannte Unterwagen 15 umfasst ein Fahrwerk 16, das mehrere Fahrwerksachsen aufweisen kann, von denen zumindest eine einlenkbar ausgebildet und zumindest eine antreibbar sein kann. Ein Fahrantrieb zum Antreiben der zumindest einen Fahrwerksachse kann beispielsweise einen Verbrennungsmotor oder einen Elektromotor oder eine Mischform in Form eines Hybridantriebs umfassen. Insbesondere kann der Unterwagen 15 einen straßenverkehrstauglichen Lastkraftwagen bilden, der die genannte Drehbühne 13 trägt und von einer Führerkabine aus gelenkt und gesteuert werden kann. Im Arbeitsbetrieb auf der Baustelle kann der Unterwagen 15 durch ausfahrbare Stützfüße 19 am Boden abgestützt werden, wobei vorteilhafterweise durch unterschiedlich weites Ausfahren der Stützfüße 19 ein ungleichmäßiger Boden austariert und/oder ein exakt waagrechter Stand des Unterwagens 15 erzielt werden kann.

Die Tragsäulen 7, 8, 9 und 10 bzw. der Turm 11 des Krans 12 sind an der genannten Drehbühne 13 vorteilhafterweise wippbar um eine liegende Wippachse 17 im Fußbereich der jeweiligen Tragsäule bzw. des Turms angelenkt, um aus der in Figur 2 gezeigten aufrechten Arbeitsstellung in eine liegende Transportstellung umgelegt werden zu können. Das Auf- und Niederwippen kann dabei mittels eines Wippantriebs 18 beispielsweise in Form von Hydraulikzylindern erledigt werden.

Je nach Höhe bzw. Länge der Tragsäulen 7, 8, 9 und 10 bzw. des Turms 11 kann es notwendig oder hilfreich sein, die Tragsäulen für die Transportstellung zusammenklappen und/oder einteleskopieren zu können. Hierzu können die Tragsäulen bzw. der Turm aus mehreren Säulenstücken zusammengesetzt sein, die relativ zueinander um eine Querachse zusammengeklappt oder einteleskopiert werden können, was mittels eines Klappantriebs oder eines Teleskopierantriebs fremdenergiebetätigt erfolgen kann.

Wie Figur 2 weiterhin zeigt, können die Drehbühnen 13 der mobilen Einheiten jeweils ein Ballastgewicht 20 tragen, das Kippmomente auffängt bzw. kompensiert, die von der Verseilung 2 her über die Tragsäulen 7, 8, 9 und 10 bzw. den Turm 11 eingeleitet werden. Die Tragsäulen 7, 8, 9 und 10 bzw. der Turm 11 werden in der aufrechten Arbeitsstellung von dem genannten Wippantrieb und/oder zusätzlich von einer Abspannung 21 gehalten, die die jeweilige Tragsäule bzw. den Turm an der Drehbühne 13 abspannt, vgl. Figur 2. Das Ballastgewicht 20 fängt über die genannte Abspannung 21 und/oder den Wippantrieb eingeleiteten Kippmomente ab.

Wie Figur 2 zeigt, kann jede Tragsäule 7, 8, 9 und 10 bzw. der Turm 11 des Krans 12 in einem oberen Endabschnitt jeweils einen Anlenkpunkt für ein oberes Steuerseil 5 und in einem darunterliegenden Abschnitt, insbesondere in einem Fußabschnitt einen unteren Anlenkpunkt 23 für das untere Steuerseil 6 aufweisen, wobei die genannten oberen und unteren Anlenkpunkte 22 und 23 von Umlenkrollen gebildet sein können, die das jeweilige Steuerseil 5 bzw. 6 umlenken und zu jeweils einer Seilwinde 24 bzw. 25 führen, mittels derer die Steuerseile 5 und 6 einer jeden mobilen Einheit unabhängig voneinander, gleichwohl aufeinander abgestimmt verstellt werden können. Wie Figur 2 zeigt, können die genannten Anlenkpunkte 22 und 23 ausreichend weit voneinander höhenversetzt sein, sodass der Arbeitskopf 4 von den Steuerseilen 5 und 6 sowohl nach oben wie auch nach unten fixiert bzw. geführt wird. Gleichwohl wäre es jedoch ebenfalls möglich, beide Steuerseile von oben her zuzuführen.

Durch die unterschiedlich hohe Anlenkung der Steuerseile 5 und 6 an dem Arbeitskopf 4, vgl. Figur 2, kann der Arbeitskopf 4 in seiner Ausrichtung exakt geführt werden.

Zum Verfahren und/oder Positionieren des Arbeitskopfs 4 ist eine elektronische Steuervorrichtung 26 vorgesehen, die die Seilwinden 24 und 25 an jeder mobilen Säuleneinheit und damit das Einholen bzw. Nachlassen der Steuerseile 5 und 6 steuern kann. Vorteilhafterweise kann dabei an jeder mobilen Säulen- bzw. Kraneinheit eine lokale Steuereinheit 27 vorgesehen sein, die die Seilwinden 24 und 25 an der jeweiligen mobilen Einheit steuern kann, wobei die lokale Steuereinheit 27 jeweils elektronisch ausgebildet sein kann, beispielsweise einen Mikroprozessor und einen Programmspeicher umfassen kann, um eine Steuerungsroutine in Form eines Software-Programms abzuarbeiten. Vorteilhafterweise steuert die genannte lokale Steuereinheit 27 nicht nur die Seilwinden 24 und 25, sondern führt auch eine Traglastüberwachung aus. Insbesondere kann die lokale Steuereinheit 27 ein Traglastüberwachungsmodul umfassen, welches das in die mobile Säuleneinheit eingeleitete Kippmoment überwacht und mit einem maximalen Kippmoment abgleicht. Hierzu kann die genannte Traglastüberwachungseinheit beispielsweise den Seilzug der beiden Steuerseile 5 und 6 und gegebenenfalls deren Ablauf- bzw. Schrägungswinkel überwachen, um hieraus das aktuell in die Tragsäule eingeleitete Kippmoment zu bestimmen, welches dann mit dem zulässigen Kippmoment abgeglichen werden kann. Bei Erreichen oder Überschreiten des zulässigen Kippmoments kann die Steuereinheit beispielsweise die Windenantriebe stillsetzen.

Um die Windenbewegungen der verschiedenen mobilen Säuleneinheiten miteinander zu koordinieren, umfasst die genannte Steuervorrichtung 26 vorteilhafterweise eine übergeordnete oder zentrale Steuereinheit 28, die mit den mehreren lokalen Steuereinheiten 27 kommunizieren kann, wie dies eingangs erläutert wurde. Insbesondere können die mehreren lokalen Steuereinheiten 27 Steuerbefehle von der zentralen Steuereinheit 28 für die Windenbewegungen der Seilwinden 24 und 25 ausführen und/oder erfasste Seilwindenbewegungen an die zentrale Steuereinheit 28 rückmelden, um die Steuerseile 5 und 6 der mehreren mobilen Tragsäuleneinheiten so aufeinander abzustimmen, dass der Arbeitskopf 4 in der gewünschten Weise bewegt wird.

Vorteilhafterweise umfasst die genannte Steuervorrichtung 26 eine Sensorik, mittels derer die Position der mehreren Tragsäulen einschließlich des Turms relativ zueinander sowie deren Ausrichtung und Höhenversatz relativ zueinander bestimmt werden kann. Insbesondere kann eine Sensoreinrichtung 29 Abstandssensoren 30 beispielsweise in Form von Lasermessgeräten umfassen, die jeweils den Abstand einer Tragsäule 7, 8, 9 und 10 bzw. des Turms 11 von den jeweils benachbarten Tragsäulen messen kann, wobei die genannten Abstandssensoren 30 den horizontalen Abstand der Tragsäulen voneinander bestimmen kann. Wie Figur 1 zeigt, kann die Steuervorrichtung 26 aus den gemessenen Abständen Abweichungen Δ₁, Δ₂, Δ₃...Δₙ bestimmen, die jeweils die Abweichung des tatsächlichen Abstellorts der jeweiligen Tragsäule von einem vorbestimmten Aufstellort und/oder von der vorbestimmten Beabstandung der Tragsäulen voneinander angibt. Ist die gewünschte Soll-Aufstellanordnung der Tragsäulen an sich ein Rechteck oder Quadrat mit vorbestimmter Kantenlänge, kann die genannte Abweichung Δ₁, Δ₂...Δₙ beispielsweise die Abweichung vom jeweiligen Eckpunkt des Rechtecks bzw. Quadrats in Richtung einer Längskante angeben und/oder die Abweichung des Abstands von der vorbestimmten Kantenlänge angeben.

In ähnlicher Weise kann die Sensoreinrichtung 29 auch den Höhenversatz der Tragsäulen bzw. deren Aufstellorte erfassen. Die Sensoreinrichtung 29 kann hierzu Höhensensoren 31 an den jeweiligen mobilen Einheiten umfassen, die die Höhenposition einer Tragsäule oder beispielsweise des damit verbundenen Unterwagens oder der damit verbundenen Drehbühne relativ zu einer anderen Mobileinheit erfassen können. Alternativ oder zusätzlich können die Höhensensoren 31 auch die Höhenlage der jeweiligen Mobileinheit relativ zu einem vorbestimmten Nullniveau bestimmen, welches beispielsweise ein bestimmter, ortsfester Punkt der Aufstellumgebung, insbesondere im Bereich des vom Arbeitskopf 4 überfahrenen Arbeitsfeldes sein kann. Beispielsweise kann der Mittelpunkt des vom Seilroboter 1 überfahrenen Arbeitsfelds als Nullniveau gewählt werden, relativ zu dem die genannten Höhensensoren 31 die jeweilige Höhenlage der jeweiligen mobilen Einheit erfassen. Die genannten Höhensensoren 31 können dabei beispielsweise Lasermesseinrichtungen umfassen, die nach dem Triangulationsprinzip arbeiten können.

Wie Figur 2 zeigt, können die Höhensensoren 31 insbesondere jeweils den Höhenversatz Δ₁, Δ₂...Δ₅, Δ₆ der jeweiligen mobilen Einheit relativ zum Nullniveau bestimmen.

Anhand der von der Sensoreinrichtung 29 bestimmten Abstands- und Höhenversatzdaten kann die Steuervorrichtung 26, insbesondere ein Anpassungs- und/oder Korrekturmodul, welches in Form eines Software-Bausteins ausgebildet sein kann, die Steuerbefehle zum Verfahren der Seilwinden 24 und 25 korrigieren, um die gewünschte Positionierung und/oder den gewünschten Verfahrweg des Arbeitskopfs 4 zu realisieren. Die Steuervorrichtung 26 kann an sich von einer vorgegebenen Aufstellmatrix, beispielsweise einem exakt horizontal ausgerichteten Quadrat der Anlenkpunkte der Verseilung ausgehen, und anhand der sensorisch erfassten Abstands- und/oder Höhenversatzdaten Korrekturfaktoren berechnen, mithilfe derer die Steuerbefehle dann an die tatsächliche Aufstellsicherung angepasst werden.

## Patentansprüche

1. Seilroboter zur Erstellung eines Bauwerks oder Manipulation eines Werkstücks, mit einem Arbeitskopf (4), der durch eine Verseilung (2) umfassend zumindest drei Steuerseile (5, 6) an einer Tragstruktur (3) umfassend zumindest drei Tragsäulen (7, 8, 9, 10, 11) aufgehängt ist, wobei Seilwinden (24, 25) zum Verstellen der Steuerseile (5, 6) relativ zu der Tragstruktur (3) und/oder relativ zum Arbeitskopf (4) vorgesehen und von einer elektronischen Steuervorrichtung (26) zum Verfahren des Arbeitskopfs (4) ansteuerbar sind, **dadurch gekennzeichnet, dass** die Tragsäulen (7, 8, 9, 10, 11) der Trägerstruktur (3) jeweils wippbar und gegebenenfalls auch teleskopierbar auf einer Drehbühne (13) angeordnet sind, die ein Ballastgewicht (20) zum Abfangen eines von der Verseilung (2) in die jeweilige Tragsäule eingeleiteten Kippmoments aufweist und um eine aufrechte Drehbühnenachse (14) drehbar auf einem Unterwagen (15) angeordnet ist, der ein Fahrwerk (16) aufweist und zusammen mit der Drehbühne (13) und der abgewippten und gegebenenfalls auch einteleskopierten Tragsäule (7, 8, 9, 10, 11) verfahrbar ausgebildet ist.

2. Seilroboter nach dem vorhergehenden Anspruch, wobei an der Drehbühne (13) ein Wippantrieb (18), insbesondere zumindest ein Wippzylinder, zum Aufwippen der Tragsäule in eine aufrechte Arbeitsstellung aus einer liegenden Transportstellung vorgesehen ist.

3. Seilroboter nach einem der vorhergehenden Ansprüche, wobei den Tragsäulen (7, 8, 9, 10), die jeweils mehrere Säulenstücke umfassen, jeweils ein Teleskopier- und/oder Klappantrieb zum Austeleskopieren und/oder Ausklappen der Säulenstücke in eine Arbeitsstellung größerer Säulenlänge aus einer Transportstellung kleinerer Säulenlänge zugeordnet ist.

4. Seilroboter nach einem der vorhergehenden Ansprüche, wobei der Unterwagen (15) einen Fahrantrieb, insbesondere einen Verbrennungs- und/oder einen Elektromotor, zum Antreiben zumindest einer Fahrwerksachse aufweist, und zumindest eine lenkbare Fahrwerksachse umfasst.

5. Seilroboter nach einem der vorhergehenden Ansprüche, wobei die Steuerseile (5, 6) als hochfeste Faserseile umfassend Kunstfasern ausgebildet sind.

6. Seilroboter nach einem der vorhergehenden Ansprüche, wobei zumindest eine Tragsäule (10) vom Turm (11) eines Turmdrehkrans gebildet ist, welcher Turmdrehkran einen Kranausleger (32) trägt, von dem ein Hubseil mit einem Lasthaken (33) abläuft, wobei vorzugsweise an dem Kranausleger (32) eine Laufkatze verfahrbar gelagert ist, über die das genannte Hubseil abläuft, wobei der genannte Turmdrehkran als Untendreher ausgebildet ist, dessen Turm mit seinem unteren Endabschnitt auf einer Drehbühne (13) montiert ist, die um eine aufrechte Drehbühnenachse (14) verdrehbar gelagert ist, wobei der Turmdrehkran als Mobilkran ausgebildet ist, dessen Turm (11) auf einem Unterwagen (15) mit einem Fahrwerk (16) montiert ist, der zusammen mit dem Turm verfahrbar ist.

7. Seilroboter nach einem der vorhergehenden Ansprüche, wobei die elektronische Steuervorrichtung (26) eine Sensoreinrichtung (29) zum Erfassen der Positionen und/oder Ausrichtungen der Tragsäulen (7, 8, 9, 10) und/oder der daran vorgesehenen Anlenkpunkte (22, 23) für die Verseilung (2) relativ zueinander, sowie ein Anpassung- und/oder Korrekturmodul zum Anpassen und/oder Korrigieren der Steuerbefehle für die Verstellung der Seilwinden (24, 25) in Abhängigkeit der erfassten Positionen und/oder Ausrichtungen der Tragsäulen und/oder der daran vorgesehenen Anlenkpunkte relativ zueinander aufweist.

8. Seilroboter nach dem vorhergehenden Anspruch, wobei die genannte Sensoreinrichtung (29) Abstandssensoren (30) zum Erfassen eines horizontalen Abstands der Tragsäulen (7, 8, 9, 10) relativ voneinander und/oder relativ von einem vorbestimmten Umgebungspunkt aufweist und das Anpassungs- und/oder Korrekturmodul der Steuervorrichtung (26) die Steuerbefehle für die Windenverstellung anhand der erfassten Horizontalabstände anpasst und/oder korrigiert.

9. Seilroboter nach einem der vorhergehenden Ansprüche, wobei die Sensoreinrichtung (29) Höhensensoren (31) zum Bestimmen der Höhenposition der Tragsäulen (7, 8, 9, 10) und/oder der daran angebrachten Anlenkpunkte (22, 23) für die Verseilung (2) relativ zueinander und/oder relativ zu dem Niveau eines vorbestimmten Umgebungspunkts aufweist und das Anpassungs- und/oder Korrekturmodul der Steuervorrichtung (26) dazu ausgebildet ist, die Steuerbefehle für die Windenverstellung der Seilwinden (24, 25) in Abhängigkeit der bestimmten Höhenpositionen der Tragsäulen (7, 8, 9, 10) und/oder der daran angebrachten Anlenkpunkte (22, 23) vorzunehmen.

10. Seilroboter nach einem der vorhergehenden Ansprüche, wobei die Steuervorrichtung (26) eine zentrale Steuereinheit (28) umfasst, die mit lokalen Steuereinheiten (27) kommuniziert, die an den jeweiligen mobilen Tragsäuleneinheiten vorgesehen und zum Ansteuern der an den mobilen Tragsäuleneinheiten vorgesehenen Seilwinden (24, 25) ausgebildet sind, wobei die zentrale Steuereinheit (28) den lokalen Steuereinheiten (27) Sollwerte für die Seilverstellung und/oder Windenverstellung vorgibt.

11. Seilroboter nach einem der vorhergehenden Ansprüche, wobei die Steuervorrichtung (26) ein Überwachungsmodul zum Überwachen der Standfestigkeit der mobilen Tragsäuleneinheiten aufweist, welches Überwachungsmodul dazu ausgebildet ist, ein jeweiliges Kippmoment, das von der Verseilung (2) über eine jeweilige Tragsäule in die jeweilige mobile Tragsäuleneinheit eingeleitet wird, zu überwachen und mit einem zulässigen Kippmoment abzugleichen, wobei das Überwachungsmodul dezentral in die jeweiligen lokalen Steuereinheiten (27) der einzelnen mobilen Tragsäuleneinheiten integriert ist.

12. Seilroboter nach einem der vorhergehenden Ansprüche, wobei an jeder Tragsäule (7, 8, 9, 10) jeweils zwei Anlenkpunkte (22, 23) zum Anlenken zweier Steuerseile (5, 6) vorgesehen und voneinander höhenbeabstandet sind, sodass die beiden Steuerseile (5, 6) an der jeweiligen Tragsäule in einer gemeinsamen aufrechten Ebene zueinander höhenversetzt zu dem Arbeitskopf (4) verlaufen, wobei die beiden Anlenkpunkte (22, 23) in oberen und unteren Endabschnitten der jeweiligen Tragsäule (7, 8, 9, 10) angeordnet sind, sodass ein Steuerseil (5) den Arbeitskopf (4) nach oben zieht und das andere Steuerseil (6) den Arbeitskopf (4) nach unten zieht.

13. Seilroboter nach einem der vorhergehenden Ansprüche, wobei die Steuerseile (5, 6) an den Tragsäulen (7, 8, 9, 10) an den dortigen Anlenkpunkten (22, 23) durch Seilrollen umgelenkt und zu den Seilwinden (24, 25) geführt werden, welche Seilwinden (24, 25) im Bereich des Säulenfußes und/oder auf der Drehbühne (13) angeordnet sind.

14. Seilroboter nach einem der vorhergehenden Ansprüche, wobei die Tragsäulen (7, 8, 9, 10) ausschließlich an der Drehbühne (13) gehalten sind und/oder frei von Bodenabspannungen, die im Boden verankert sind, ausgebildet sind.

15. Seilroboter nach einem der vorhergehenden Ansprüche, wobei die Verseilung (2) von drei Tragsäulen (7, 8, 9) sowie dem Turm (11) eines Turmdrehkrans (12) aufgespannt ist.

## Claims

1. Cable robot for creating a structure or manipulating a workpiece, comprising a working head (4) which is suspended on a support structure (3) having at least three support columns (7, 8, 9, 10, 11) by a system of cables (2) having at least three control cables (5, 6), wherein cable winches (24, 25) are provided for adjusting the control cables (5, 6) relative to the support structure (3) and/or relative to the working head (4), and can be actuated by an electronic control device (26) for moving the working head (4), **characterised in that** the support columns (7, 8, 9, 10, 11) of the support structure (3) are luffingly and, if necessary, telescopically arranged on a revolving stage (13), which comprises a ballast weight (20) for absorbing a tilting moment introduced into the respective support column by the system of cables (2) and which is arranged on an undercarriage (15) such that it can rotate about an upright revolving stage axis (14), the undercarriage having a chassis (16) and being configured such that it can move with the revolving stage (13) and the downwardly-luffed and, if necessary, also retracted support column (7, 8, 9, 10, 11).

2. Cable robot according to the preceding claim, wherein a luffing drive (18), in particular at least one luffing cylinder, is provided on the revolving stage (13) for luffing the support column up into an upright working position from a horizontal transport position.

3. Cable robot according to any one of the preceding claims, wherein a telescoping drive and/or folding drive for extending and/or unfolding the column portions into a working position of greater column length from a transport position of smaller column length is associated in each case with the support columns (7, 8, 9, 10), each of the support columns comprising a plurality of column portions.

4. Cable robot according to any one of the preceding claims, wherein the undercarriage (15) comprises a travel drive, in particular an engine and/or an electric motor, for driving at least one chassis axle, and comprises at least one steerable chassis axle.

5. Cable robot according to any one of the preceding claims, wherein the control cables (5, 6) are configured as high-strength fibre ropes comprising synthetic fibres.

6. Cable robot according to any one of the preceding claims, wherein at least one support column (10) is formed by the tower (11) of a revolving tower crane, which revolving tower crane supports a crane boom (32) from which a hoist cable with a lifting hook (33) extends, wherein a trolley, via which the hoisting rope extends, is preferably mounted on the crane boom (32) so as to be movable, wherein the revolving tower crane is configured as a bottom-slewer, the tower of which is mounted with its lower end portion on a revolving stage (13) which is rotatably supported around an upright revolving stage axis (14), wherein the revolving tower crane is configured as a mobile crane, the tower (11) of which is mounted on an undercarriage (15) having a chassis (16) which can be moved together with the tower.

7. Cable robot according to any one of the preceding claims, wherein the electronic control device (26) comprises a sensor device (29) for detecting the positions and/or orientations of the support columns (7, 8, 9, 10) and/or the articulation points (22, 23) provided thereon for the system of cables (2) relative to one another, as well as an adaptation and/or correction module for adapting and/or correcting the control commands for the adjustment of the cable winches (24, 25) as a function of the detected positions and/or orientations of the support columns and/or the articulation points provided thereon relative to one another.

8. Cable robot according to the preceding claim, wherein the sensor device (29) comprises distance sensors (30) for detecting a horizontal distance of the support columns (7, 8, 9, 10) relative to one another and/or relative to a predetermined ambient point, and the adjustment and/or correction module of the control device (26) adjusts and/or corrects the control commands for the winch adjustment on the basis of the detected horizontal distances.

9. Cable robot according to any one of the preceding claims, wherein the sensor device (29) comprises height sensors (31) for determining the height position of the support columns (7, 8, 9, 10) and/or the articulation points (22, 23) attached thereon for the system of cables (2) relative to one another and/or relative to the level of a predetermined ambient point, and the adaptation and/or correction module of the control device (26) is configured to carry out the control commands for the winch adjustment of the cable winches (24, 25) as a function of the determined height positions of the support columns (7, 8, 9, 10) and/or of the articulation points (22, 23) mounted thereon.

10. Cable robot according to any one of the preceding claims, wherein the control device (26) comprises a central control unit (28) which communicates with local control units (27) which are provided on the respective mobile support column units and are configured to control the cable winches (24, 25) provided on the mobile support column units, wherein the central control unit (28) provides the local control units (27) with desired values for the cable adjustment and/or winch adjustment.

11. Cable robot according to any one of the preceding claims, wherein the control device (26) comprises a monitoring module for monitoring the stability of the mobile support column units, which monitoring module is configured to monitor a respective tilting moment which is introduced by the system of cables (2) via a respective support column into the respective mobile support column unit and to compare it with a permissible tilting moment, wherein the monitoring module is integrated in a decentralised manner into the respective local control units (27) of the individual mobile support column units.

12. Cable robot according to any one of the preceding claims, wherein two articulation points (22, 23) for articulation of two control cables (5, 6) are provided on each support column (7, 8, 9, 10) and are offset in height from one another, so that the two control cables (5, 6) on the respective support column extend in a common upright plane offset in height from one another relative to the working head (4), wherein the two articulation points (22, 23) are arranged in upper and lower end portions of the respective support column (7, 8, 9, 10) so that one control cable (5) pulls the working head (4) upwards and the other control cable (6) pulls the working head (4) downwards.

13. Cable robot according to any one of the preceding claims, wherein the control cables (5, 6) on the support columns (7, 8, 9, 10) are diverted at the articulation points (22, 23) therein by cable pulleys and guided to the cable winches (24, 25), which cable winches (24, 25) are arranged in the area of the column base and/or on the revolving stage (13).

14. Cable robot according to any one of the preceding claims, wherein the support columns (7, 8, 9, 10) are supported exclusively on the revolving stage (13) and/or are configured so as to be free of ground bracings anchored in the ground.

15. Cable robot according to any one of the preceding claims, wherein the system of cables (2) is spanned by three support columns (7, 8, 9) as well as the tower (11) of a revolving tower crane (12).

## Revendications

1. Robot à câble pour l'érection d'un ouvrage ou la manipulation d'une pièce, avec une tête de travail (4) qui est suspendue par un câblage (2) comprenant au moins trois câbles de commande (5, 6) à une structure porteuse (3) comprenant au moins trois colonnes porteuses (7, 8, 9, 10, 11), des treuils à câble (24, 25) étant prévus pour le réglage des câbles de commande (5, 6) par rapport à la structure porteuse (3) et/ou par rapport à la tête de travail (4) et pouvant être commandés par un dispositif de commande électronique (26) pour le déplacement de la tête de travail (4), **caractérisé en ce que** les colonnes porteuses (7, 8, 9, 10, 11) de la structure porteuse (3) sont agencées chacune de manière basculante et éventuellement également de manière télescopique sur une plate-forme rotative (13) qui présente un poids de lestage (20) pour absorber un couple de basculement introduit par le câblage (2) dans la colonne porteuse respective et qui est agencée de manière rotative autour d'un axe de plate-forme rotative (14) vertical sur un chariot inférieur (15), qui présente un châssis (16) et qui est configuré de manière à pouvoir être déplacé conjointement avec la plate-forme rotative (13) et la colonne porteuse (7, 8, 9, 10, 11) basculée et éventuellement également télescopée.

2. Robot à câble selon la revendication précédente, dans lequel un entraînement de basculement (18), notamment au moins un cylindre de basculement, est prévu sur la plate-forme rotative (13) pour faire basculer la colonne porteuse dans une position de travail verticale à partir d'une position de transport couchée.

3. Robot à câble selon l'une quelconque des revendications précédentes, dans lequel les colonnes porteuses (7, 8, 9, 10), qui comprennent chacune plusieurs tronçons de colonne, sont chacune associées à un entraînement de télescopage et/ou de pliage pour télescoper et/ou déplier les tronçons de colonne dans une position de travail de plus grande longueur de colonne à partir d'une position de transport de plus petite longueur de colonne.

4. Robot à câble selon l'une quelconque des revendications précédentes, dans lequel la chariot inférieur (15) présente un entraînement de déplacement, notamment un moteur à combustion et/ou un moteur électrique, pour l'entraînement d'au moins un axe de châssis, et comprend au moins un axe de châssis orientable.

5. Robot à câble selon l'une quelconque des revendications précédentes, dans lequel les câbles de commande (5, 6) sont configurés sous forme de câbles fibreux à haute résistance comprenant des fibres synthétiques.

6. Robot à câble selon l'une quelconque des revendications précédentes, dans lequel au moins une colonne porteuse (10) est formée par la tour (11) d'une grue rotative à tour, laquelle grue rotative à tour porte une flèche de grue (32) de laquelle part un câble de levage avec un crochet de charge (33), un chariot mobile sur lequel part ledit câble de levage étant de préférence monté de manière déplaçable sur la flèche de grue (32), ladite grue rotative à tour étant configurée sous forme de grue à partie rotative inférieure dont la tour est montée avec sa section d'extrémité inférieure sur une plate-forme rotative (13) qui est montée de manière à pouvoir tourner autour d'un axe de plate-forme rotative (14) vertical, la grue rotative à tour étant configurée sous forme de grue mobile dont la tour (11) est montée sur un chariot inférieur (15) avec un châssis (16) qui peut être déplacé conjointement avec la tour.

7. Robot à câble selon l'une quelconque des revendications précédentes, dans lequel le dispositif de commande électronique (26) présente un appareil à capteur (29) pour détecter les positions et/ou les orientations des colonnes porteuses (7, 8, 9, 10) et/ou des points d'articulation (22, 23) pour le câblage (2) prévus sur celles-ci les uns par rapport aux autres, ainsi qu'un module d'adaptation et/ou de correction pour adapter et/ou corriger les instructions de commande pour le réglage des treuils à câble (24, 25) en fonction des positions et/ou orientations détectées des colonnes porteuses et/ou des points d'articulation prévus sur celles-ci les uns par rapport aux autres.

8. Robot à câble selon la revendication précédente, dans lequel ledit appareil à capteur (29) présente des capteurs de distance (30) pour détecter une distance horizontale des colonnes porteuses (7, 8, 9, 10) les unes par rapport aux autres et/ou par rapport à un point prédéterminé de l'environnement, et le module d'adaptation et/ou de correction du dispositif de commande (26) adapte et/ou corrige les instructions de commande pour le réglage des treuils à partir des distances horizontales détectées.

9. Robot à câble selon l'une quelconque des revendications précédentes, dans lequel l'appareil à capteur (29) présente des capteurs de hauteur (31) pour déterminer la position en hauteur des colonnes porteuses (7, 8, 9, 10) et/ou des points d'articulation (22, 23) pour le câblage (2) disposés sur celles-ci les uns par rapport aux autres et/ou par rapport au niveau d'un point prédéterminé de l'environnement et le module d'adaptation et/ou de correction du dispositif de commande (26) est configuré pour effectuer les instructions de commande pour le réglage des treuils à câble (24, 25) en fonction des positions en hauteur déterminées des colonnes porteuses (7, 8, 9, 10) et/ou des points d'articulation (22, 23) disposés sur celles-ci.

10. Robot à câble selon l'une quelconque des revendications précédentes, dans lequel le dispositif de commande (26) comprend une unité de commande centrale (28) qui communique avec des unités de commande locales (27) qui sont prévues sur les unités de colonnes porteuses mobiles respectives et sont configurées pour commander les treuils à câble (24, 25) prévus sur les unités de colonnes porteuses mobiles, l'unité de commande centrale (28) prescrivant aux unités de commande locales (27) des valeurs de consigne pour le réglage des câbles et/ou le réglage des treuils.

11. Robot à câble selon l'une quelconque des revendications précédentes, dans lequel le dispositif de commande (26) présente un module de surveillance pour surveiller la stabilité des unités de colonnes porteuses mobiles, lequel module de surveillance est configuré pour surveiller un couple de basculement respectif qui est introduit par le câblage (2) dans l'unité de colonne porteuse mobile respective par l'intermédiaire d'une colonne porteuse respective et pour le comparer à un couple de basculement admissible, le module de surveillance étant intégré de manière décentralisée dans les unités de commande locales respectives (27) des unités de colonnes porteuses mobiles individuelles.

12. Robot à câble selon l'une quelconque des revendications précédentes, dans lequel deux points d'articulation (22, 23) sont prévus sur chaque colonne porteuse (7, 8, 9, 10) pour l'articulation de deux câbles de commande (5, 6) et sont espacés en hauteur l'un de l'autre, de telle sorte que les deux câbles de commande (5, 6) s'étendent sur la colonne porteuse respective dans un plan vertical commun décalé en hauteur l'un par rapport à l'autre par rapport à la tête de travail (4), les deux points d'articulation (22, 23) étant agencés dans des sections d'extrémité supérieure et inférieure de la colonne porteuse respective (7, 8, 9, 10), de telle sorte qu'un câble de commande (5) tire la tête de travail (4) vers le haut et l'autre câble de commande (6) tire la tête de travail (4) vers le bas.

13. Robot à câble selon l'une quelconque des revendications précédentes, dans lequel les câbles de commande (5, 6) sont déviés par des poulies sur les colonnes porteuses (7, 8, 9, 10) aux points d'articulation (22, 23) qui s'y trouvent et sont guidés vers les treuils à câble (24, 25), lesquels treuils à câble (24, 25) sont agencés dans la zone de la base de la colonne et/ou sur la plate-forme rotative (13).

14. Robot à câble selon l'une quelconque des revendications précédentes, dans lequel les colonnes porteuses (7, 8, 9, 10) sont exclusivement maintenues sur la plate-forme rotative (13) et/ou sont exemptes de haubans de sol ancrés dans le sol.

15. Robot à câble selon l'une quelconque des revendications précédentes, dans lequel le câblage (2) est tendu par trois colonnes porteuses (7, 8, 9) ainsi que par la tour (11) d'une grue rotative à tour (12).
